Europäisches Patentamt

European Patent Office

Office européen des brevets

(11) Publication number: **0 048 440**
**B1**

# EUROPEAN PATENT SPECIFICATION

(45) Date of publication of patent specification: **04.12.85**

(21) Application number: **81107322.0**

(22) Date of filing: **16.09.81**

(51) Int. Cl.⁴: **G 05 D 7/06,** G 05 D 7/01, F 16 K 31/08 // F23N1/00

(54) **Flow control valve.**

(30) Priority: **17.09.80 JP 129705/80**

(43) Date of publication of application:
**31.03.82 Bulletin 82/13**

(45) Publication of the grant of the patent:
**04.12.85 Bulletin 85/49**

(84) Designated Contracting States:
**DE FR GB**

(56) References cited:
**FR-A-2 189 671**
**FR-A-2 354 497**
**FR-A-2 377 564**
**JP-A-46 043 776**
**US-A-3 028 876**
**US-A-3 502 100**
**US-A-3 747 634**
**US-A-3 822 039**
**US-A-3 985 333**

(73) Proprietor: **Matsushita Electric Industrial Co., Ltd.**
**1006, Oaza Kadoma**
**Kadoma-shi Osaka-fu, 571 (JP)**

(72) Inventor: **Shirai, Shigeru, Eng.**
**2541-29, Oaza Hari, Tsugemura**
**Yamabe-gun Nara-ken (JP)**
Inventor: **Tanahashi, Takashi, Eng.**
**12-2, Shikanodainishi-2-chome**
**Ikoma-shi (JP)**
Inventor: **Yamauchi, Shozi, Eng.**
**376, Tsutsuicho**
**Yamatokoriyama-shi (JP)**
Inventor: **Matsumoto, Tomohide, Eng.**
**376, Tsutsuicho**
**Yamatokoriyama-shi (JP)**

(74) Representative: **Patentanwälte Leinweber & Zimmermann**
**Rosental 7/II Aufg.**
**D-8000 München 2 (DE)**

Courier Press, Leamington Spa, England.

## Description

The invention relates to a flow control valve comprising a flow passage for a fluid; a valve member disposed in said passage and adapted to vary the cross-sectional area of said passage; an electric driving section adapted to produce a force acting on said valve member; a primary chamber defined at the upstream side of the valve member; a secondary chamber defined at the downstream side of the valve member; a back pressure chamber for the valve member; a portion defined in the flow passage and having a communication passage to said back pressure chamber; and fixed rigid members which seal both of said flow passage and said back pressure chamber from the atmosphere without permitting any communication between both of said flow passage and back pressure chamber and the atmosphere.

In a conventional flow control valve of the above referenced type (US—A—3 502 100) there is a controllable restriction in an inlet conduit for the primary chamber, said primary chamber therefore acting as the low pressure portion. The valve member is formed by a vertically aligned piston which is slidably accommodated in a vertically aligned cylinder interposed between the primary and secondary chambers. While the cylinder is open to said primary chamber at one of its front sides, the back pressure chamber is defined between its other front side and the opposing front side of the piston. The circumferential wall of the cylinder is perforated in order to connect the inside of the cylinder to the secondary chamber. These perforations may be opened and closed depending on the sliding position of the piston within the cylinder which sliding movement is controlled by the electromagnetic driving section operatively connected to the piston in combination with the forces exerted on this piston by gravity and the pressure difference exerted on the piston, said pressure difference being caused by the pressure in the back pressure chamber on the one hand and the opposing pressure in the primary chamber on the other hand. Since the primary chamber constitutes the low pressure chamber and the back pressure chamber is communicated by the communication passage to the inlet conduit of the primary chamber upstream of the restriction this pressure difference is the one between the inlet pressure of the inlet conduit and the pressure in the primary chamber forming the low pressure portion. The conventional valve has therefore a disadvantage in that the outlet flow is affected by the inlet pressure. Furthermore, since there exists friction between the piston and the cylinder it is also difficult to smoothly change the flow of low pressure gas for controlling the latter proportionally to the electromagnetic force exerted by the driving section.

There is already known a needle valve (US—A—3 747 634) in which the movement of the needle with respect to its valve seat is controlled by an electric driving section of a moving coil type, in which a coil supporting the needle is located within an air gap formed by the yoke of a permanent magnet. By applying current to the coil there is an axial shift of the coil with respect to the permanent magnet, thus altering the axial distance between the valve needle and the valve seat.

Similarly there is also known a needle valve for carburators of a moving magnet type (FR—A—2 377 564) in which a permanent magnet carrying the valve needle is arranged in opposing relationship to an iron core which carries a coil. Energization of this coil induces an alteration in the magnetic force acting between the iron core and the moving permanent magnet resulting in a corresponding control of the position of the valve needle.

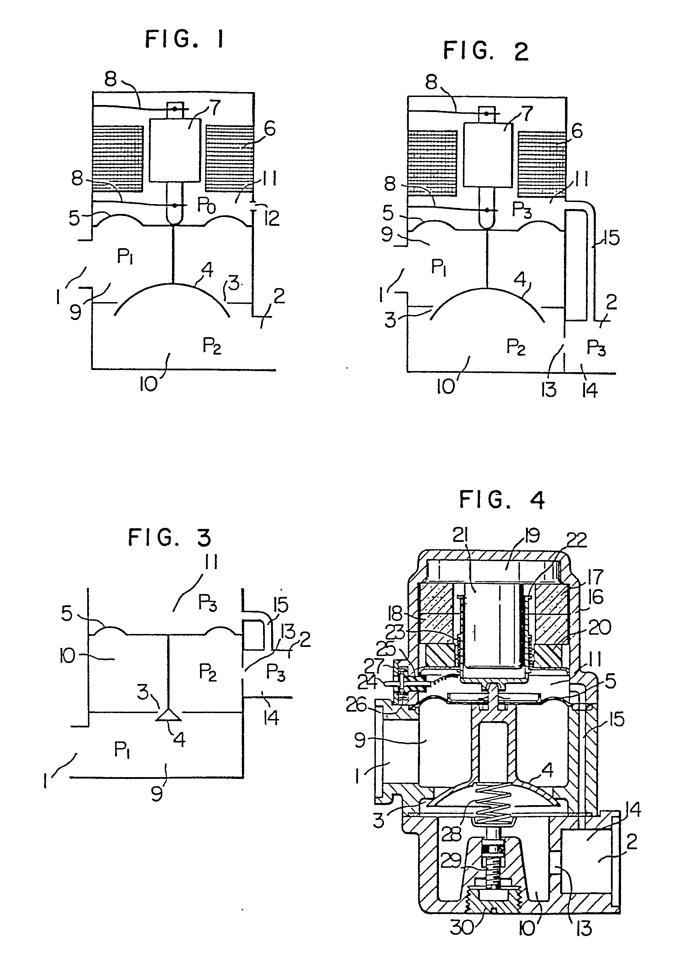

Hitherto, ON-OFF type solenoid valves have been used as means for controlling the rate of burning in the conventional gas burner. In order to improve the performance of the equipments, however, there is an increasing demand for a continuous and linear control of the burning rate. Fig. 1 shows a known proportional control valve (Japanese Patent Laid-Open Publication No. 46 437/76) used hitherto to meet this demand.

The principle of operation of the proportional valve shown in Fig. 1 is to utilize the principle of pressure regulator. Briefly, this valve operates to vary the pressure of the fluid at the valve outlet by changing the electromagnetic force applied to the valve member through a change in the electric current flowing in a coil.

More specifically, referring to Fig. 1, this proportional control valve has a valve seat 3 adapted to cooperate with a valve member 4 which is linked to the central portion of a diaphragm 5, in regulating the flow of a fluid which comes into this valve through a fluid inlet 1 and comes out of the same through a fluid outlet 2. A plunger 7 received by the central cavity formed by a coil 6 is supported be leaf springs 8 for free vertical movement without contacting the coil 6. The plunger 7 makes a contact at its lower end with the center of the diaphragm 5 so as to impart a force to the valve member 4.

In the proportional valve having the described construction, the following relationship exists in the operating condition of the valve.

$$P_2 = \frac{F + P_1 \cdot Sv - P_1 \cdot Sd}{Sv}$$

where, $P_1$ represents the pressure in a primary chamber 9 defined at the upstream side of the valve member 4, $P_2$ represents the pressure in a secondary chamber 10 defined at the downstream side of the valve member 4, Sv represents the effective pressure area of the valve member 4, Sd represents the effective pressure area of the diaphragm 5 and F represents the driving force exerted on the valve member 4 by the driving section including a coil 6 and a plunger 7.

Since, the areas Sv and Sd are selected to be substantially equal, the pressure $P_2$ is represented substantially as follows:

$$P_2 \fallingdotseq F/Sv$$

Therefore, the secondary pressure $P_2$ can be varied in accordance with the force F generated by the electromagnetic driving section, i.e. by adjusting the electric current supplied to the coil 6. In consequence, the flow rate of the fluid flowing through this valve is controlled by varying the electric current supplied to the coil.

As will be understood from the foregoing explanation, the required driving force generated in the electromagnetic driving section is determined by the product $P_2 \cdot Sv$. This makes it difficult to reduce the size and the power consumption of the electromagnetic driving section. Another problem of this known valve is as follows. An atmospheric port 12 is formed in order to maintain an atmospheric pressure Po in the back pressure chamber 11. Therefore, if the diaphragm 5 is broken or any hole is accidentally formed, the raw gas flows into the back pressure chamber 11 from the primary chamber 9 through the broken part of the diaphragm and is further released to the atmosphere through the atmospheric port 12 so as to cause a danger of external leak of the gas.

Accordingly, it is an object of the present invention to provide a flow control valve of the above referenced type in which the control of the outlet flow rate is not dependent on the inlet pressure.

In order to attain this object the invention is characterized in that there is provided a diaphragm adjacent to said flow passage, said diaphragm being operatively linked to the valve member, in that said back pressure chamber is defined by said diaphragm at the opposite side of said diaphragm to said flow passage, and in that said portion is a low pressure portion located at the downstream side of the secondary chamber.

The flow control valve in accordance with the invention is especially suited for use in a gas burner and adapted for continuously and linearly controlling the flow rate of the gas in accordance with an electrical signal applied to the driving section while the control does not depend on the inlet pressure. Moreover, the valve has a simple construction, is suitable for household use and permits the control of the fluid with an extremely decreased power consumption.

Additionally, in the flow control valve according to the invention the fluid to be controlled is sealed from the ambient air by a sealing structure which is wholly constructed with rigid stationary members with no movable part acting as a sealing means to eliminate the danger of external leakage of the fluid.

In one embodiment of the present invention a variable restriction such as a needle valve is disposed between the secondary chamber and the low pressure portion. This permits an adjustment of the pressure differential therebetween to diminish fluctuation in the operational characteristic of the flow control valve.

In another embodiment the electric driving section is of a moving coil type having a permanent magnet, coil, yoke and center pole, wherein at least one of the outer peripheral surface of said center pole and the inner peripheral surface of the coil bobbin is applied or coated with a low friction material selected from polytetrafluoroethylene resin group. This surface treatment of the frictional parts improves the response characteristic and thereby diminishes the hysteresis of operation of the flow control valve. A further embodiment comprises a terminal assembly having a hermetic structure including a rubber bush, terminals for supplying electric power to said coil and an insulating cap. By that the solenoid coil is isolated from the fluid to eliminate the corrosion of the coil by the fluid and the danger of catching of fire by the inflammable fluid.

The invention is more in detail explained in the following description with reference to the drawings in which:

Fig. 1 illustrates a known flow control valve;

Fig. 2 illustrates a flow control valve in accordance with an embodiment to the invention;

Fig. 3 schematically illustrates an essential portion of a flow control valve constructed in accordance with another embodiment of the invention;

Figs. 4 and 5 are sectional views of different embodiments; and

Fig. 6 schematically illustrates a different embodiment.

Referring to Fig. 2, a flow control valve in accordance with a first embodiment of the invention has a valve member 4 linked to the central portion of a diaphragm 5 and adapted to cooperate with a valve seat 3 in controlling the flow of a fluid coming into and out of the valve through a fluid inlet 1 and a fluid outlet 2, respectively. A coil 6 has a central bore which recevies a plunger 7 supported by leaf springs 8 in such a manner as to be able to move up and down without contacting the coil 6. The lower end of the plunger 7 contacts the central portion of the diaphragm 5 so that the force of the plunger is transmitted to the valve member 4. A primary chamber 9 and a secondary chamber 10 are defined at the upstream and downstream sides of the valve member 4, respectively. A low pressure portion is provided further downstream from the secondary chamber 10 and is communicated with the latter through a restriction 13 constituted by an orifice. The low pressure portion 14 is communicated with the back pressure chamber 11 of the diaphragm through a communication passage 15.

The seal between the fluid and the ambient air does therefore not depend on the diaphragm 5 but is achieved solely by a fixed and rigid member such as a casing which defines the back pressure chamber 11.

The flow control valve of this embodiment having the described construction operates in a manner explained hereinunder. The following relationship exists in this flow control valve in the operating condition.

$$P_2 - P_3 = F/Sv \quad (Sv = Sd)$$

where, $P_1$ represents the pressure in the primary chamber 9, $P_2$ represents the pressure in the secondary chamber 10, $P_3$ represents the pressure in the low-pressure portion 14 and the back pressure chamber 11, Sv represents the effective pressure area of the valve member 4, Sd represents the effective pressure area of the diaphragm 5, and F represents the driving force exerted on the valve member 4 by the electromagnetic driving section including the coil 6 and the plunger 7. The valve member 4 and the diaphragm 5 are designed to have an equal effective pressure area of Sv=Sd.

As is well known, the following relationship exists between the flow rate Q of the fluid in the orifice and the pressure differential across the orifice, i.e. $P_2 - P_3$:

$$Q = C\sqrt{P_2 - P_3}$$

where, C represents a proportion constant.

Therefore, the flow rate of the fluid can be controlled and varied as required, through a function of the force F exerted on the valve member 4 by the electromagnetic driving section.

The level of the force to be produced by the electromagnetic driving section will be compared with that in the conventional flow control valve explained before.

In the conventional flow control valve shown in Fig. 1, assuming here that the pressure $P_2$ of the fluid at the fluid outlet 2, i.e. the pressure $P_2$ in the secondary chamber 10, is 1.00 kPa, the force F is represented by 1.00 Sv, from the aforementioned relationship of $F = P_2$ Sv. Similarly, in the flow control valve of the invention, assuming that the fluid pressure at the fluid outlet 2, i.e. the pressure $P_3$ in the low pressure portion 14, is 1.00 kPa equally to the case of the conventional flow control valve, and that the pressure $P_2$ in the secondary chamber 10 is 1.20 kPa, the required force is calculated to be 0.20 Sv from the aforementioned relationship of $F = (P_2 - P_3)$ Sv. This means that the required driving force is reduced to about 1/5 of that required in the conventional flow control valve. This ratio of reduction of the driving force can be further decreased to 1/10 by suitably adjusting the restriction 13 in such a manner as to reduce the pressure differential $P_2 - P_3$. It is, therefore, possible to adjust the characteristics of the valve and, hence, to diminish fluctuation in operational characteristics of the valve by constructing the restriction 13 as a variable restriction such as an adjustable needle valve.

Thus, according to the invention, the level of the force for driving the valve is very much reduced as compared with the conventional flow control valve, so that is possible to obtain a flow control valve with small-sized construction and much reduced power consumption. In addition, the flow control valve of the invention need not have any atmospheric port 12 which is essential in the conventional flow control valve for maintaining the back pressure chamber 11 in communication with the atmosphere.

Therefore, even if the diaphragm 5 is accidentally broken or a hole is happenedly formed in the same, the fluid flows safely from the primary chamber 9 to the back pressure chamber 11 through the broken part of the diaphragm 5 and further to the outlet 2 through the communication passage 15.

In consequence, with the flow control valve of the invention, it is possible to obtain a gas combustion equipment of enhanced safety, in which the danger of explosion due to external leak of the raw gas is completely eliminated.

It will be clear to those skilled in the art that the above-described advantages can be obtained not only through the arrangement of the valve member 4, diaphragm 5 and so forth which are arranged as shown in Fig. 2 but also through various other arrangements, an example of which is shown at Fig. 3.

Also, the solenoid-actuated plunger type electric driving section as shown in Fig. 2 is not exclusive, and it is possible to obtain a flow control valve of enhanced safety and reduced power consumption by any type of electric driving section capable of producing a force in accordance with an electric input, such as, for example, a moving-coil type one as shown in Fig. 4 or moving-magnet repulsion type one as shown in Fig. 5.

The above-mentioned embodiments shown in Figs. 4 and 5 will be explained in more detail with reference to the drawings.

Referring to Fig. 4, the flow control valve of this embodiment has a valve member 4 linked to the central portion of a diaphragm 5 and positioned to oppose to a valve seat 3 to cooperate with the latter in controlling the flow of a fluid which comes into the valve through the fluid inlet 1 and out through the fluid outlet 2. A primary chamber 9 and a secondary chamber 10 are defined at the upstream and downstream sides of the valve member 4. A low pressure portion 14 is formed at the downstream side of the secondary chamber 10 and is communicated with the latter through a restriction 13. The low pressure portion 14 is communicated with a back pressure chamber 11 of the diaphragm 5 through a communication passage 15. Both of the fluid passage confronting one side of the diaphragm 5 and the back pressure chamber 11 confronting the other side of the diaphragm 5 are sealed against the ambient air by means of a fixed rigid member.

The upper part of the valve member 4 constitutes a moving-coil driving section 16.

Reference numerals 17 and 18 denote permanent magnet rings made of ferrite and constituting a magnetic circuit in cooperation with a yoke 19, ring yoke 20 and a center pole 21. The magnetic gap between the ring yoke 20 and the center pole 21 receives a coil 23 wound round a coil bobbin 22, the lower end of which is in contact with the upper end of the valve member 4. A reference numeral 24 designates the lead terminals of the coil, while 25 denotes the sealing rubber bushes. Reference numerals 26 and 27 denote, respectively, the insulator cap and a pressing plate. These members 24 to 27 in combination constitute a terminal assembly which is constructed to provide a perfect seal between the back pressure chamber 11 and the ambient air. A spring 28 is adapted to produce a small force for lifting the valve member 4. The force of the spring 28 is adjustable by means of an adjusting member 29. A reference numeral 30 designates a cap.

In operation, as an electric current I is supplied to the coil 23 in the magnetic field around the magnetic gap, the coil 23 produces a force F which acts to depress the valve downwardly. T force F is obtained proportionally to the level of the electric current I, in accordance with the known equation of

$$F = B \cdot I \cdot l,$$

where B represents the magnetic flux density in the magnetic gap and I represents the coil length. The force F which has to be produced by the moving-coil driving section 16 may be sufficiently small, because the back pressure chamber 11 is communicated with the low pressure chamber 14 through the communication passage 15, as in the case of the embodiment shown in Fig. 2. It is, therefore, possible to reduce the size of the moving-coil driving section 16 while reducing the power consumption of the latter. In addition, since the force F is determined as $B \cdot I \cdot l$, the force F can take the same value for a given value of electric current I, independent of the current is being increased or decreased to approach this given value, so that the hysteresis in operation of the flow control valve is avoided almost perfectly. This feature provides a great advantage over the embodiment shown in Fig. 2 in which the driving section is of the solenoid-actuated plunger type, since the latter inevitably has a magnetic hysteresis. However, since the coil bobbin 22 moves up and down while making a frictional contact at its inner periphery with the outer periphery of the center pole, the desired smooth operation of the coil bobbin 22 and, hence, of the valve member 4 is failed if the friction resistance is excessively large. This problem is serious particularly in the flow control valve designed to operate with reduced level of force F, as in the case of the flow control valve of the invention, so that it is essential that the friction coefficient should be decreased.

From this point of view, in the embodiment shown in Fig. 4, at least one of the outer peripheral surface of the center pole 21 or the inner peripheral surface of the coil bobbin 22 is applied or coated with a low friction material selected from polytetrafluoroethylene group. Alternatively, the coil bobbin 22 is made from a low friction resin material which may be the above-mentioned resin or other resins such as selected from nylon group, to obtain an equivalent smooth and linear flow characteristics. The hermetic structure of the terminal assembly including the rubber bushes 25, terminals 24 and the insulating caps 26 eliminates the step of heating and melting of a glass, which is necessitated in the known glass hermetic seal, and advantageously simplifies the assembling process to facilitate the mass production. This terminal structure can equally be applied to the flow control valve having the electric driving section of the type other than the moving-coil type one shown in Fig. 4.

Referring now to Fig. 5, the embodiment shown in this Figure differs from that shown in Fig. 4 in that the electric driving section is of a moving-magnet type constituted by a permanent magnet 31, a coil 32, an iron core 33 and the yoke 34. The permanent magnet 31 is fixed to the diaphragm 5 and the valve member 4 through a mounting base 35, while the iron core 33 surrounded by the coil 32 is disposed to oppose to the permanent magnet 31. Therefore, when the coil 32 is not energized, a force acts to make the permanent magnet 31 to move toward the iron core 33, so that the valve member 4 is urged in the direction to close the valve seat 3. As the electric current supplied to the coil 32 is increased, a magnetic pole of the same polarity as the permanent magnet 31 is formed on the surface of the iron core 33 confronting the permanent magnet, to produce a repulsion force the level of which increases gradually. A tension spring 36 produces a force which acts to suppress the closing force of the valve member 4. The arrangement is such that the force of the spring 36 can be adjusted by means of a nut 37.

As will be seen from the foregoing description, the force F acting on the valve member 4 is controlled through the control of the magnetic repulsion force by adjusting the electric current flowing through the coil 32, thereby to effect the control of the fluid flowing in the flow control valve. Since the low pressure chamber 14 is communicated with the back pressure chamber 11 through the communication passage (15) also in this case, the power consumption by the electric driving section can be greatly diminished as in the case of the embodiments explained in connection with Figs. 2 and 4. In addition, the flow control valve of this embodiment having a moving-magnet type electric driving section has the following advantages. Namely, a smooth operation characteristics is obtained because of lack of any frictional part. Furthermore the control flow valve of this embodiment can be applied to any type of fluid because the coil 32 is completely isolated from the fluid.

It is also to be noted that, in the embodiment shown in Fig. 5, the restriction 13 is constituted by a nozzle type restriction which can provide a materially smaller pressure drop in the fluid passage as compared with the orifice, to make it possible to obtain a smaller pressure differential between the secondary chamber 10 and the low pressure portion 14.

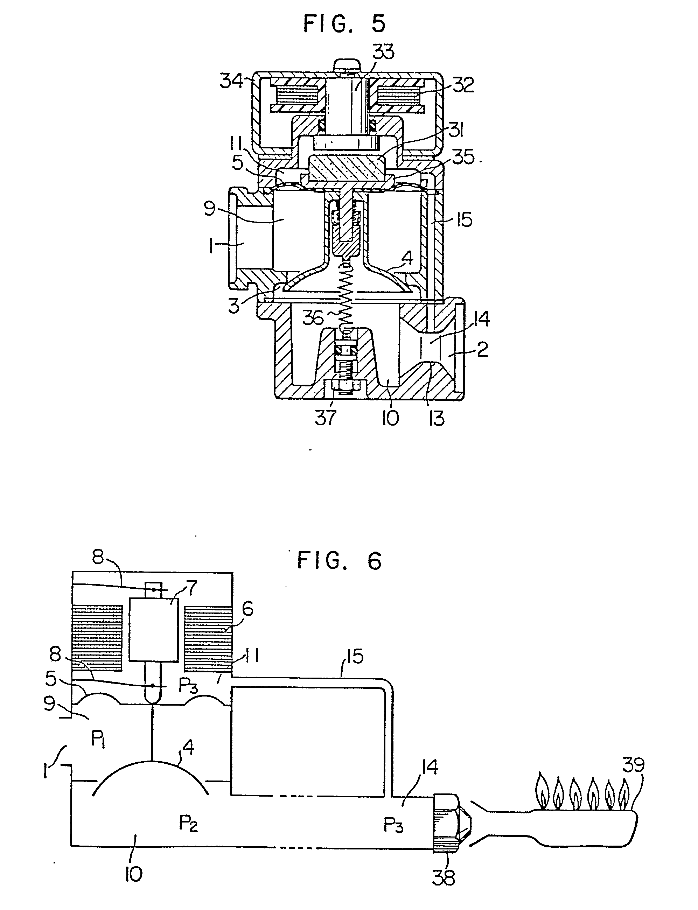

Fig. 6 shows a different embodiment of the invention applied to a gas combustion equipment. The arrangement around the valve member 4 and the electric driving section are materially identical to those of Fig. 2. In this embodiment, however, no positive restrictions provided between the secondary chamber 10 and the low pressure portion 14, and the pressure differential between the low pressure portion 14 and the secondary chamber 10 is obtained merely as a pressure drop due to the flow resistance along the passage. A reference numeral 39 denotes a burner having a burner nozzle 38.

In the practical use of this embodiment, when the gas has, as in the case of propane gas, a high calorific power and source pressure, as well as a low flow rate, it is preferred to provide a positive restriction such as an orifice between the secondary chamber 10 and the low pressure portion 14, because, in such a case, the pressure drop due to the flow resistance does not mattery materially.

To the contrary, in the case where the gas has a comparatively low pressure and low calorific value, while required to be supplied at a large rate as in the case of ordinary city gas, the restriction can be provided through a nozzle which produces only small resistance, or the positive restriction is completely eliminated as in the case of the embodiment shown in Fig. 6, because, in such a case, the pressure loss in the passage must be diminished as much as possible.

As has been described, according to the invention, a low pressure portion under pressure $P_3$ is formed in the flow passage and is communicated with the back pressure chamber through the communication passage, so that the required driving power to be produced by the electric driving section can be decreased by an amount corresponding to the product of the pressure $P_3$ and the effective pressure area of the diaphragm, as compared with the conventional flow control valve in which the electric driving section is required to produce a repulsion force corresponding to the product of the pressure $P_2$ in the secondary chamber and the effective pressure area of the diaphragm. In consequence, the present invention provides a flow control valve which can operate with a much reduced power consumption.

As another advantage of the invention, it is to be noted that, since the back pressure chamber is not opened to the atmosphere in contrast to the conventional flow control valve in which the back pressure chamber is communicated with the atmosphere through an atmospheric port, the danger of external leak of the fluid, attributable to the breakdown of the diaphragm, is very much suppressed to ensure a higher safety of the flow control valve.

Thus, the present invention is quite useful and offers a great advantage in this field of industry.

**Claims**

1. A flow control valve comprising a flow passage for a fluid; a valve member (4) disposed in said passage and adapted to vary the cross-sectional area of said passage; an electric driving section (6, 7) adapted to produce a force acting on said valve member (4); a primary chamber (9) defined at the upstream side of the valve member (4); a secondary chamber (10) defined at the downstream side of the valve member (4); a back pressure chamber (11) for the valve member (4); a portion (14) defined in the flow passage and having a communication passage (15) to said back pressure chamber (11); and fixed rigid members which seal both of said flow passage and said back pressure chamber (11) from the atmosphere without permitting any communication between both of said flow passage and back pressure chamber (11) and the atmosphere, characterized in that there is provided a diaphragm (5) adjacent to said flow passage, said diaphragm (5) being operatively linked to the valve member (4), in that said back pressure chamber (11) is defined by said diaphragm (5) at the opposite side of said diaphragm (5) to said flow passage, and in that said portion (14) is a low pressure portion located at the downstream side of said secondary chamber (10).

2. A flow control valve as claimed in claim 1, wherein the pressure differential between said secondary chamber (10) and said low pressure portion (14) is achieved by any one of an orifice disposed in the flow passage, nozzle disposed in the flow passage and the flow resistance along the flow passage.

3. A flow control valve as claimed in claim 1, wherein a variable restriction such as a needle valve is disposed between said secondary chamber 10, and said low pressure portion 14.

4. A flow control valve as claimed in claim 1, wherein said electric driving section is of a plunger type including a stationary coil (6) and a plunger (7) movably received in the central bore of said coil (6).

5. A flow control valve as claimed in claim 1, wherein said electric driving section (16) is of a moving-coil type having a permanent magnet (17, 18), coil (23), yoke (19, 20) and a center pole (21).

6. A flow control valve as claimed in claim 5, wherein at least one of the outer peripheral surface of said center pole (21) and the inner peripheral surface of the coil bobbin (22) is applied or coated with a low friction material selected from polytetrafluoroethylene resin group.

7. A flow control valve as claimed in claim 5, characterized by further comprising a terminal assembly having a hermetic structure including a rubber bush (25), terminals (24) for supplying electric power to said coil (23) and an insulating cap (26).

8. A flow control valve as claimed in claim 1, wherein said electric driving section is of a moving-magnet type including a permanent magnet (31) and an iron core (33).

## Revendications

1. Vanne de régulation de débit, comprenant un passage de courant pour un fluide; un organe de vanne (4) disposé dans ce passage et agencé de manière à faire varier la superficie de la section de ce passage; une section de commande électrique (6, 7) agencée de manière à produire une force qui agit sur l'organe de vanne (4); une chamber primaire (9) délimitée du côté amont de l'organe de vanne (4); une chambre secondaire (10) délimitée du côté aval de l'organe de vanne (4); une chambre de contrepression (11) pour l'organe de vanne (4); une partie (14) délimitée dans le passage de courant et comportant un passage de communication (15) avec la chambre de contre-pression (11); et des organes rigides fixes qui isolent hermétiquement le passage de courant et la chambre de contre-pression (11) de l'atmosphère sans permettre aucune communication entre l'une et l'autre de ce passage de courant et de cette chambre de contre-pression (11) et l'atmosphère, caractérisée en ce qu'il est prévu un diaphragme (5) contigu au passage de courant, ce diaphragme (5) étant uni fonctionnellement à l'organe de vanne (4), en ce que la chambre de contre-pression (11) est délimitée par ce diaphragme (5) du côté opposé de ce diaphragme (5) par rapport au passage de courant, et en ce que ladite partie (14) est une partie à basse pression, située du côté aval de la chambre secondaire (10).

2. Vanne de régulation de débit selon la revendication 1, dans laquelle la différence de pression entre la chambre secondaire (10) et la partie à basse pression (14) est obtenue par l'une quelconque des solutions consistant à disposer un orifice dans le passage de courant, à disposer un ajutage dans le passage de courant et à utiliser la résistance à l'écoulement le long du passage de courant.

3. Vanne de régulation de débit selon la revendication 1, dans laquelle un étranglement variable, tel qu'une soupape à pointeau, est disposé entre la chambre secondaire (10) et la partie à basse pression (14).

4. Vanne de régulation de débit selon la revendication 1, dans laquelle la section de commande électrique est du type à noyau plongeur, comprenant une bobine fixe (6) et un noyau plongeur (7) reçus dans le trou central de cette bobine (6) de manière à pouvour s'y déplacer.

5. Vanne de régulation de débit selon la revendication 1, dans laquelle la section de commande électrique (16) est du type à bobine mobile, comprenant un aimant permanent (17, 18), une bobine (23), une culasse (19, 20) et un pôle central (21).

6. Vanne de régulation de débit selon la revendication 5, dans laquelle l'une au moins de la surface périphérique extérieure du pôle central (21) et de la surface périphérique intérieure de l'armature de bobine (22) est plaquée ou revêtue d'une matière anti-friction choisie dans le groupe des résines de polytétrafluoroéthylène.

7. Vanne de régulation de débit selon la revendication 5, caractérisée en ce qu'elle comprend en outre ensemble de connexion de construction hermétique, comprenant une douille en caoutchouc (25) des bornes (24) d'alimentation électrique de la bobine (23) et une coiffe isolante (26).

8. Vanne de régulation de débit selon la revendication 1, dans laquelle la section de commande électrique est du type à aimant mobile, comprenant un aimant permanent (31) et un noyau de fer doux (33).

## Patentansprüche

1. Durchflußregelventil mit einem Durchflußkanal für ein Fluid, einem in dem Kanal angeordneten Ventilglied (4), durch das die Querschnittsfläche des Kanals veränderbar ist, einem elektrischen Antriebsabschnitt (6, 7), durch den eine auf das Ventilglied (4) wirkende Kraft erzeugbar ist, einer stromaufwärts des Ventilgliedes (4) begrenzten Primärkammer (9), einer stromabwärts des Ventilgliedes (4) begrenzten Sekundärkammer (10), einer Gegendruckkammer (11) für das Ventilglied (4), einem in dem Durchflußkanal begrenzten Bereich (14), der einen Verbindungskanal (15) zu der Gegendruckkammer (11) aufweist und feststehenden starren Teilen, die sowohl den Durchflußkanal als auch die Gegendruckkammer (11) gegen die Atmosphäre abdichten, ohne irgendeine Verbindung zwischen sowohl dem Durchflußkanal als auch der Gegendruckkammer (11) und der Atmosphäre zuzulassen, dadurch gekennzeichnet, daß angrenzend an den Durchflußkanal eine Membran (5) vorgesehen ist, die mit dem Ventilglied (4) betätigungsmäßig verbunden ist, daß die Gegendruckkammer (11) durch die Membran (5) an der dem Durchflußkanal entgegengesetzten Seite der Membran (5) begrenzt ist und daß der Bereich (14) ein stromabwärts der Sekundärkammer (10) gelegener Niederdruckbereich ist.

2. Durchflußregelventil nach Anspruch 1, bei dem das Druckdifferential zwischen der Sekundärkammer (10) und dem Niederdruckbereich (14) entweder durch eine in dem Durchflußkanal angeordnete Öffnung, eine in dem Durchflußkanal angeordnete Düse oder den längs des Durchflußkanals herrschenden Durchflußwiderstand hergestellt wird.

3. Durchflußregelventil nach Anspruch 1, bei dem zwischen der Sekundärkammer (10) und dem Niederdruckbereich (14) eine veränderliche Verengung, wie ein Nadelventil, angeordnet ist.

4. Durchflußregelventil nach Anspruch 1, bei dem der elektrische Antriebsabschnitt vom Tauchkolbentyp ist, welcher eine stationäre Spule (6) und einen in die zentrale Bohrung der Spule (6) beweglich aufgenommenen Tauchkolben (7) aufweist.

5. Durchflußregelventil nach Anspruch 1, dadurch gekennzeichnet, daß der elektrische Antriebsabschnitt (16) vom Schwingspulentyp ist, der einen Permanentmagneten (17, 18), eine Spule (23), ein Joch (19, 20) und einen Mittelpol (21) aufweist.

6. Durchflußregelventil nach Anspruch 5, bei dem mindestens entweder die äußere Umfangsfläche des Mittelpols (21) oder die innere Umfangsfläche des Spulenkörpers (22) mit einem aus der Polytetrafluoroäthylenharzgruppe ausgewählten Werkstoof niedriger Reibung versehen oder beschichtet ist.

7. Durchflußregel ventil nach Anspruch 5, dadurch gekennzeichnet, daß ferner eine Anschlußanordnung mit einem hermetischen Aufbau vorgesehen ist, der eine Gummibuchse (25), Anschlüsse (24) zur Zuführung elektrischer Energie zu der Spule (23) und eine Isolierkappe (26) aufweist.

8. Durchflußregelventil nach Anspruch 1, bei dem der elektrische Antriebsabschnitt vom Schwingspulentyp ist, der einen Permanentmagneten (31) und einen Eisenkern (33) aufweist.

FIG. 1

FIG. 2

FIG. 3

FIG. 4

FIG. 5

FIG. 6